# EUROPEAN PATENT SPECIFICATION

(11) **EP 2 928 117 B1**
(45) Date of publication and mention of the grant of the patent: **02.09.2020**
(21) Application number: 15160675.3
(22) Date of filing: 24.03.2015
(51) Int. Cl.: H04L 12/24, H04L 29/12

(54) **SYSTEM AND METHOD FOR DEVICE REGISTRATION AND DISCOVERY IN CONTENT-CENTRIC NETWORKS**
SYSTEM UND VERFAHREN ZUR VORRICHTUNGSREGISTRIERUNG UND ENTDECKUNG IN INHALTSZENTRIERTEN NETZWERKEN
SYSTÈME ET PROCÉDÉ D'ENREGISTREMENT ET DE DÉCOUVERTE D'UN DISPOSITIF DANS DES RÉSEAUX AXÉS SUR LE CONTENU

(30) Priority: 01.04.2014 US 201414242761
(43) Date of publication of application: 07.10.2015
(73) Proprietor: Cisco Technology, Inc., San Jose, CA 95134 (US)
(72) Inventor: Mahadevan, Priya, Sunnyvale, CA 94089 (US)
(74) Representative: Kazi, Ilya

(56) References cited:
- US-A1- 2013 016 695
- DROMS BUCKNELL UNIVERSITY R: "Dynamic Host Configuration Protocol; rfc2131.txt", 19970301, 1 March 1997 (1997-03-01), XP015007915, ISSN: 0000-0003
- Jeff Burke ET AL: "Authenticated Lighting Control Using Named Data Networking", , 10 October 2012 (2012-10-10), pages 1-12, XP055210179, Retrieved from the Internet: URL:http://named-data.net/wp-content/uploa ds/TRlighting.pdf [retrieved on 2015-08-28]
- RAVISHANKAR RAVINDRAN ET AL: "Information-centric networking based homenet", INTEGRATED NETWORK MANAGEMENT (IM 2013), 2013 IFIP/IEEE INTERNATIONAL SYMPOSIUM ON, IEEE, 27 May 2013 (2013-05-27), pages 1102-1108, XP032445787, ISBN: 978-1-4673-5229-1
- Anonymous: "NDN-Routing/ccnx-dhcp . GitHub", , 10 February 2012 (2012-02-10), pages 1-2, XP055208363, Retrieved from the Internet: URL:https://github.com/NDN-Routing/ccnx-dh cp [retrieved on 2015-08-18]
- Cccnx.Org: "CCNx Protocol", , 2 March 2012 (2012-03-02), pages 1-4, XP055069230, Retrieved from the Internet: URL:http://web.archive.org/web/20120316072 830/http://www.ccnx.org/releases/latest/do c/technical/CCNxProtocol.html [retrieved on 2013-07-02]

## Description

### BACKGROUND

### Field

The present disclosure relates generally to a content-centric network (CCN). More specifically, the present disclosure relates to a system and method for device registration and discovery in content-centric networks (CCNs).

### Related Art

The proliferation of the Internet and e-commerce continues to fuel revolutionary changes in the network industry. Today, a significant number of information exchanges, from online movie viewing to daily news delivery, retail sales, and instant messaging, are conducted online. An increasing number of Internet applications are also becoming mobile. However, the current Internet operates on a largely location-based addressing scheme. The two most ubiquitous protocols, the Internet Protocol (IP) and Ethernet protocol, are both based on end-host addresses. That is, a consumer of content can only receive the content by explicitly requesting the content from an address (e.g., IP address or Ethernet media access control (MAC) address) that is typically associated with a physical object or location. This restrictive addressing scheme is becoming progressively more inadequate for meeting the ever-changing network demands.

Recently, information-centric network (ICN) architectures have been proposed in the industry where content is directly named and addressed. Content-Centric Networking (CCN), an exemplary ICN architecture brings a new approach to content transport. Instead of having network traffic viewed at the application level as end-to-end conversations over which content travels, content is requested or returned based on its unique name, and the network is responsible for routing content from the provider to the consumer. Note that content includes data that can be transported in the communication system, including any form of data such as text, images, video, and/or audio. A consumer and a provider can be a person at a computer or an automated process inside or outside the CCN. A piece of content can refer to the entire content or a respective portion of the content. For example, a newspaper article might be represented by multiple pieces of content embodied as data packets. A piece of content can also be associated with metadata describing or augmenting the piece of content with information such as authentication data, creation date, content owner, etc.

In CCN, names play an important role. More specifically, content objects and Interests are identified by their names, which is typically a hierarchically structured variable-length identifier (HSVLI). Interests and content objects flow through the network based on their names. When a computing device first joins a CCN network, it needs to know where to forward Interest messages, and it also needs to know what name or name prefix to include in the Interest message that needs to be sent in order to obtain basic services in the new environment. In addition, the device needs to register itself to the CCN network.

Jeff Burke ET AL: "Authenticated Lighting Control Using Named Data Networking", 10 October 2012, pages 1-12, discloses the design and implementation of authenticated lighting control, as an example of actuation in Building Automation Systems (BAS), using Named Data Networking (NDN). It discloses the application, motivation and outlines preliminary designs for device bootstrapping, assigning permissions to applications, and authenticated control. Additionally, it reviews a testbed implementation, deployment and initial testing.

RAVISHANKAR RAVINDRAN ET AL: "Information-centric networking based homenet", INTEGRATED NETWORK MANAGEMENT (IM 2013), 2013 IFIP/IEEE INTERNATIONAL SYMPOSIUM ON, IEEE, 27 May 2013, pages 1102-1108, discloses a case for an Information-centric networking (ICN) based home network (homenet). An IETF proposal for homenets is based on IPv6 which inherits fundamental problems of IP such as security, mobility, and multicasting, which are integral features of an ICN design. How these ICN virtues help in the context of homenet considering the need for a homogenous platform to handle the diversity of devices, services, and user needs is disclosed. A comparison of IETF's homenet proposal and an ICN based approach in terms of service, control, and data plane features and complexity is also disclosed. Further, a proof of concept design of an ICN based homenet is disclosed along with its usefulness through a comparative analysis of realizing fundamental homenet features in an ICN versus IP based framework.

Anonymous: "NDN-Routing/ccnx-dhcp. GitHub" 10 February 2012, URL:https://github.com/NDN-Routing/ccnx-dhcp discloses that a server needs a set of routes from its configuration file and listens to the local multicast face. A client multicasts an interest in the server and replies with a set of routes. The client can then configure its faces according to the routes it receives. If the client does not get the servers reply, it will install a fallback face from the client's configuration. When the client receives the routes on the server, the client configures its faces accordingly. US-A1-2013/0016695 describes a method and apparatus for seamless mobility in a content-centric network. A first point of attachment (PoA) is configured to communicate with a mobile node (MN) and maintain a forwarding state for the MN. A second PoA is configured to communicate with the MN and obtain the forwarding state for the MN from the first PoA after a handoff of the MN from the first PoA to the second PoA. The forwarding state is used to exchange a plurality of interests and a plurality of data responses between the MN and the CCN.

### SUMMARY

One embodiment of the present invention provides a system according to claim 1 and a method according to claim 10.

In a variation on this embodiment, the interest further includes one or more of: a public key associated with the client device, a device type, a device model number, and a device identifier in an arbitrary format.

In a variation on this embodiment, the content object further includes one or more of: a routable name prefix assigned to the client device, a subdirectory device-discovery namespace, and optionally a namespace for the client device to obtain a signing key.

In a variation on this embodiment, the interest has a pre-determined name prefix.

In a further variation, the system notifies the client device of the pre-determined name prefix during an initial configuration of the client device.

In a further variation, the pre-determined name prefix is provided by the manufacturer of the client device.

In a variation on this embodiment, the system updates a device database by adding the client device using the assigned name.

In a further variation, the system receives an additional interest for discovery of other devices in the CCN. In response to the additional interest, the system generates a device-list content object based on information stored in the device database and returns the device-list content object.

In a further variation, the system performs a security check to determine whether a device sending the additional interest is authorized to obtain the device-list content object. In response to determining that the device sending the additional interest is authorized to obtain the device-list content object, the system sends the device-list content object to the authorized device.

### BRIEF DESCRIPTION OF THE FIGURES

FIG. 1 illustrates an exemplary architecture of a network, in accordance with an embodiment of the present invention.
FIG. 2 presents a diagram presenting an exemplary architecture of a CCN dynamic namespace configuration protocol (DNCP) client, in accordance with an embodiment of the present invention.
FIG. 3 presents a diagram presenting an exemplary architecture of a CCN-DNCP server, in accordance with an embodiment of the present invention.
FIG. 4 presents a flowchart illustrating an exemplary server process for dynamic namespace configuration, in accordance with an embodiment of the present invention.
FIG. 5 presents a flowchart illustrating an exemplary client process for dynamic namespace configuration, in accordance with an embodiment of the present invention.
FIG. 6 presents a diagram illustrating an exemplary architecture of a device-discovery broker, in accordance with an embodiment of the present invention.
FIG. 7 presents a flowchart illustrating an exemplary device-registration process performed by the device-discovery broker, in accordance with an embodiment of the present invention.
FIG. 8 presents a flowchart illustrating an exemplary device-discovery process performed by the device-discovery broker, in accordance with an embodiment of the present invention.
FIG. 9 illustrates an exemplary system for device registration and discovery, in accordance with an embodiment of the present invention.

In the figures, like reference numerals refer to the same figure elements.

### DETAILED DESCRIPTION

### Overview

Embodiments of the present invention provide a system and method for device registration and discovery in CCNs. The solution allows new "out-of-the-box" devices to register themselves to the network in order to publish their data, and allows existing devices to discover newly registered devices in the network. Furthermore, if the new device has a routable name prefix and is willing to be reached under that name prefix, then appropriate Interest messages to that name prefix can be routed to this device. It can also start serving (or publishing) content under one or more authorized name prefixes. More specifically, when a device is freshly "out-of-the box", or when it is introduced to a new CCN environment, it obtains the namespaces of a registration service and a device-discovery service, as part of the initial configuration. Subsequently, it can send an Interest message containing required registration information to the namespace of the registration service. If the registration service determines that all required information has been provided by the Interest message, the registration service returns a Content Object to the device, and includes the device name and other information associated with that device in a device database. A device can also send an Interest message to the namespace of the device-discovery service, which in turn returns a Content Object. The returned Content Object may optionally list all registered devices in the network.

In general, CCN uses two types of messages: Interests and Content Objects. An Interest carries the hierarchically structured variable-length identifier (HSVLI), also called the "name," of a Content Object and serves as a request for that object. If a network element (e.g., router) receives multiple Interests for the same name, it may aggregate those Interests. A network element along the path of the Interest with a matching Content Object may cache and return that object, satisfying the Interest. The Content Object follows the reverse path of the Interest to the origin(s) of the Interest. A Content Object contains, among other information, the same HSVLI, the object's payload, and cryptographic information used to bind the HSVLI to the payload.

The terms used in the present disclosure are generally defined as follows (but their interpretation is not limited to such):
"HSVLI:" Hierarchically structured variable-length identifier, also called a Name. It is an ordered list of Name Components, which may be variable length octet strings. In human-readable form, it can be represented in a format such as ccnx:/path/part. Also the HSVLO may not be human readable. As mentioned above, HSVLIs refer to content, and it is desirable that they be able to represent organizational structures for content and be at least partially meaningful to humans. An individual component of an HSVLI may have an arbitrary length. Furthermore, HSVLIs can have explicitly delimited components, can include any sequence of bytes, and are not limited to human-readable characters. A longest-prefix-match lookup is important in forwarding packets with HSVLIs. For example, an HSVLI indicating an Interest in "/parc/home/bob" will match both "/parc/home/bob/test.txt" and "/parc/home/bob" will match both "/parc/home/bob/test.txt" and "/parc/home/bob/bar.txt." The longest match, in terms of the number of name components, is considered the best because it is the most specific. Detailed descriptions of the HSVLIs can be found in U.S. Patent No. 8,160,069, entitled "SYSTEM FOR FORWARDING A PACKET WITH A HIERARCHICHALLY STRUCTURED VARIABLE-LENGTH IDENTIFIER," by inventors Van L. Jacobson and James D. Thornton, filed 23 September 2009.
"Interest:" A request for a Content Object. The Interest specifies an HSVLI name prefix and other optional selectors that can be used to choose among multiple objects with the same name prefix. Any Content Object whose name matches the Interest name prefix (and optionally other requested parameters such as publisher key-ID match) satisfies the Interest.
"Content Object:" A data object sent in response to an Interest. It has an HSVLI name and a Content payload that are bound together via a cryptographic signature. Optionally, all Content Objects have an implicit terminal name component made up of the SHA-256 digest of the Content Object. In one embodiment, the implicit digest is not transferred on the wire, but is computed at each hop, if needed.
"Face:" In CCN, the term face is a generalization of the concept of an interface. A face may be a connection to a network or directly to an application party. A face may be configured to send and receive broadcast or multicast packets on a particular network interface, or to send and receive packets using point-to-point addressing in the underlying transport, or using a tunnel (for example a TCP tunnel). A face may also be the connection to a single application process running on the same machine, via an encapsulation like UDP or an OS-specific inter-process communication path. All messages arrive through a face and are sent out through a face.

As mentioned before, an HSVLI indicates a piece of content, is hierarchically structured, and includes contiguous components ordered from a most general level to a most specific level. The length of a respective HSVLI is not fixed. In content-centric networks, unlike a conventional IP network, a packet may be identified by an HSVLI. For example, "abcd/bob/papers/ccn/news" could be the name of the content and identifies the corresponding packet(s), i.e., the "news" article from the "ccn" collection of papers for a user named "Bob" at the organization named "ABCD." To request a piece of content, a node expresses (e.g., broadcasts) an Interest in that content by the content's name. An Interest in a piece of content can be a query for the content according to the content's name or identifier. The content, if available in the network, is sent back from any node that stores the content to the requesting node. The routing infrastructure intelligently propagates the Interest to the prospective nodes that are likely to have the information and then carries available content back along the reverse path traversed by the Interest message. Essentially the Content Object follows the breadcrumbs left by the Interest message and thus reaches the requesting node.

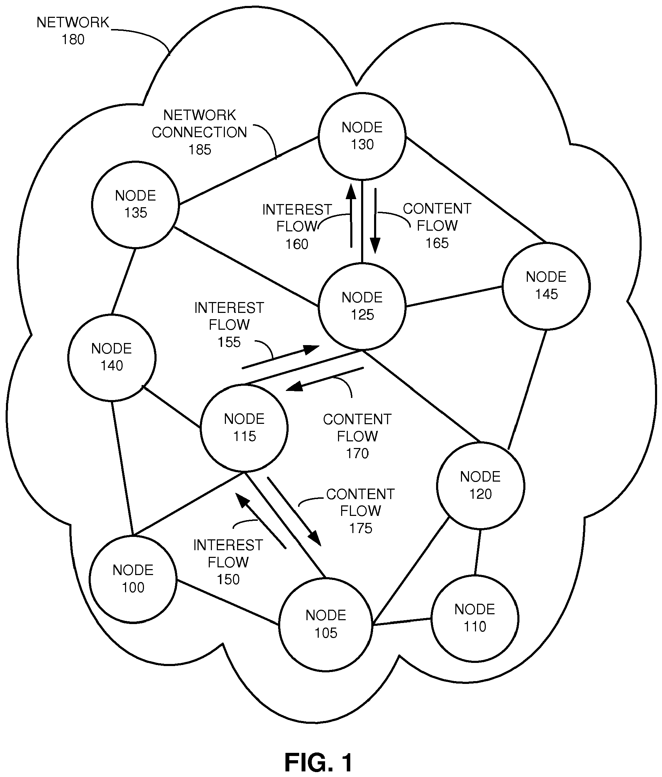

FIG. 1 illustrates an exemplary architecture of a network, in accordance with an embodiment of the present invention. In this example, a network 180 comprises nodes 100-145. Each node in the network is coupled to one or more other nodes. Network connection 185 is an example of such a connection. The network connection is shown as a solid line, but each line could also represent sub-networks or super-networks, which can couple one node to another node. Network 180 can be content-centric, a local network, a super-network, or a sub-network. Each of these networks can be interconnected so that a node in one network can reach a node in other networks. The network connection can be broadband, wireless, telephonic, satellite, or any type of network connection. A node can be a computer system, an end-point representing users, and/or a device that can generate Interest or originate content.

In accordance with an embodiment of the present invention, a consumer can generate an Interest for a piece of content and forward that Interest to a node in network 180. The piece of content can be stored at a node in network 180 by a publisher or content provider, who can be located inside or outside the network. For example, in FIG. 1, the Interest in a piece of content originates at node 105. If the content is not available at the node, the Interest flows to one or more nodes coupled to the first node. For example, in FIG.1, the Interest flows (Interest flow 150) to node 115, which does not have the content available. Next, the Interest flows (Interest flow 155) from node 115 to node 125, which again does not have the content. The Interest then flows (Interest flow 160) to node 130, which does have the content available. The flow of the Content Object then retraces its path in reverse (content flows 165, 170, and 175) until it reaches node 105, where the content is delivered. Other processes such as authentication can be involved in the flow of content.

In network 180, any number of intermediate nodes (nodes 100-145) in the path between a content holder (node 130) and the Interest generation node (node 105) can participate in caching local copies of the content as it travels across the network. Caching reduces the network load for a second subscriber located in proximity to other subscribers by implicitly sharing access to the locally cached content.

In CCN, each node maintains three major data structures, including a Forwarding Information Base (FIB), a Content Store (CS), and a Pending-Interest Table (PIT).

FIB is used to forward Interest packets toward potential source(s) of matching Content Objects. Typically, a routing protocol is used to populate the FIB among all nodes in the network. The FIB entries are often indexed by the name prefixes, with each entry including a physical address of at least one face to which the matching Interest should be forwarded. While forwarding Interest messages, longest-prefix-match lookups of names are performed at the FIB to find a matching entry.

Content Store (CS) is similar to the buffer memory used in an IP router. More particularly, CS temporarily buffers Content Objects that pass through this node, allowing efficient data retrieval by different consumers. When a router receives an Interest packet, it first checks whether there is a matching Content Object in its content store.

Pending Interest Table (PIT) keeps track of Interests forwarded upstream toward content source(s) so that a returned Content Object can be sent downstream to its requester(s). In CCN, only Interest packets are routed. The returning Content Object follows the trail of the Interest packet back to the content requester. A PIT entry for an Interest specifies the name of the Interest and one or multiple incoming faces that requested that Interest.

When an Interest packet arrives on a certain face, a longest-match lookup is done based on the content name, or the HSVLI. The index structure used for the name lookup is ordered in such a way that a CS match will be preferred over a PIT match, which will be preferred over an FIB match. Hence, if there is already a Content Object in CS that matches the Interest, the Content Object will be sent out via the face the Interest arrived on and the Interest will be discarded. Otherwise, the PIT will be checked to see if a match can be found. If so, the Interest's arrival face will be added to the PIT entry's requesting face list and the Interest will be discarded. Otherwise, the FIB will be checked and the Interest is forwarded along the one of more faces listed in the matching FIB entry.

### Dynamic Namespace Configuration

As described previously, in CCN, packets (which include Interests and Content Objects) flow through the network based on their name prefix. When a device was initialized (either for the first time ever or when it joins a network), the device needs to notify other devices in the network of its existence and to notify network routers the physical addresses of its faces. For example, when a sensor (such as a thermometer) is installed in a home for the first time, the sensor needs to be configured in order to know where to send its data. Similarly, when a laptop or a tablet computer is moved from a home environment to a coffee shop, the computer needs to know to where to send its Interest and to optionally let other devices on the network know how to reach it. Although it is possible to manually configure the devices during initialization, existing CCN protocols lack solutions for automated device initialization.

In the existing Internet Protocol (IP) network, Dynamic Host Configuration Protocol (DHCP) is used for dynamically distributing network configuration parameters, such as IP addresses for interfaces and services. More specifically, DHCP allows computers to request IP addresses and networking parameters automatically from a DHCP server, reducing the need for a network administrator or a user from having the configuring these settings manually. A similar mechanism is needed in CCN to initialize a device when the device comes online for the first time or when it is introduced to a new environment. More specifically, in order for a device to function properly in a CCN network, the device needs to know where to send Interest packets for receiving certain services. Because CCN relies on name prefix to move packets, the initial configuration of a device will involve configurations of namespaces. For example, the device may need to set up default forwarding information (which can include one or more appropriate entries) in its FIB, or to configure namespaces of various services such that requests (in the form of Interests) to these services are appropriately forwarded. In addition, in order to obtain the services, the device needs to know the name or the name prefix to be included in the appropriate Interest messages. Examples of the services may include, but are not limited to: device registration, service discovery, certification services for authorizing keys, etc.

In order to provide a automated solution for device initialization, in some embodiments, the system implements a dynamic namespace configuration protocol (DNCP) to automatically configure a device with namespaces that are required for proper functioning of the device, such as default forwarding entries, namespace of device registration and discovery service, and namespace of a name resolution (indirection) service, etc. Note that in order for the DNCP to work, the following conditions need to be met. First, each device needs to run a basic CCN stack and is capable of generating and processing CCN Interests and Content Objects. Second, the devices are either manually configured or are automatically capable of establishing underlying network connectivity (which can include, but are not limited to: Ethernet, WiFi, Bluetooth, etc.). Third, each device needs to be provided with a manufacturer-supplied, unique device identifier, which is analogous to the media access control (MAC) address. Note that such a device ID can be 16 or 32 bytes long, or can have an arbitrary length. In addition, it can take any forms that are defined by the device manufacturer. For example, each temperature sensor made by a particular manufacture may have a unique ID issued by the manufacturer. In addition, each device needs to be pre-loaded with a signing key, such as a public-private key pair, a symmetric key, or any other signing key that confirms with CCN requirements, in order to sign Content Objects that it would like to publish. If a device is not pre-configured with such keys, the DNCP service needs to direct the device to an appropriate service to obtain or certify its keys by specifying the name of this service.

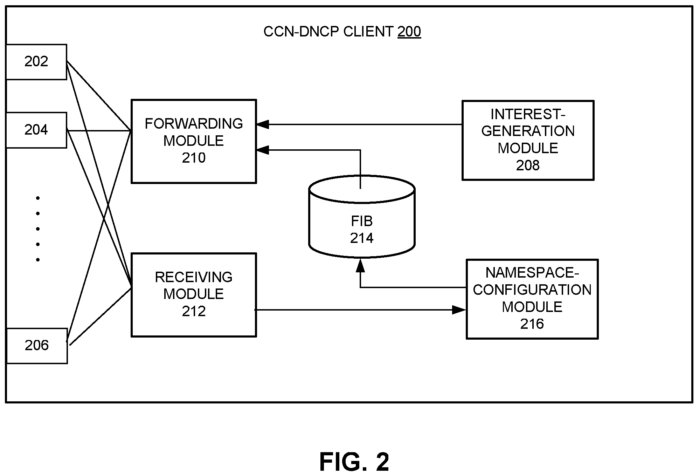

FIG. 2 presents a diagram presenting an exemplary architecture of a CCN dynamic namespace configuration protocol (DNCP) client, in accordance with an embodiment of the present invention. In FIG. 2, CCN-DNCP client 200 includes a plurality of faces, such as faces 202, 204, and 206; an Interest-generation module 208; a forwarding module 210; a receiving module 212; a forwarding information base (FIB) 214; and a namespace configuration module 216.

Faces 202-206 can include not only physical interfaces but also application processes capable of sending and receiving packets. Interest-generation module 208 is responsible for generating Interest packets, which can be requests to content or services. In some embodiments, Interest-generation module 208 is configured to generate a "HELLO" Interest message, which can be used for requesting DNCP services. In further embodiments, the "HELLO" Interest message is generated in a pre-determined namespace. In other words, the system may predefine and reserve a namespace (such as "/hello") for DNCP purpose, and CCN-DNCP client 200 is preconfigured (by the CCN stack running on the machine) with such a namespace. Note that if the pre-defined DNCP namespace is "/hello," the "HELLO" Interest has a name prefix as "/hello."

Forwarding module 210 is responsible for forwarding packets, such as Interests or Content Objects, to the various faces on CCN-DNCP client 200. According to CCN protocol, forwarding module 210 forwards Interests based on entries in FIB 214, and forwards Content Objects based on entries in the PIT (not shown in FIG. 2). In some embodiments, forwarding module 210 is configured to forward (or broadcast) the "HELLO" Interest to all faces on CCN-DNCP client 200. FIB 214 stores information for forwarding Interests. Entries in FIB 214 are often indexed by the name prefixes. In some embodiments, FIB 214 can be pre-populated (during the initialization process) with default entries, and forwarding module 210 can use those default entries to forward Interests.

Receiving module 212 is responsible for receiving, from the various faces, packets, which can include Interests and Content Objects. For example, receiving module 212 may receive a Content Object in response to a previously sent Interest. In some embodiments, receiving module 212 can receive responses to the "HELLO" Interest from a remote DNCP server. The DNCP response can include, but are not limited to: default entries for FIB 214, and namespaces for various services, such as device registration and discovery, service discovery, a resolution service for obtaining signing keys or hashes for content names, key services, printing services, and any other network services that are either in use today or may be discovered in the future.

A default entry for FIB 214 can specify the physical address of a default forwarder, which can be the DMZ (demilitarized zone) router and may have a MAC address 00:01:02:03:04:05. Hence, any Interest in the root namespace "/" can be forwarded to the default forwarder. Another default entry may specify the physical address of a local router and its matching namespace. For example, the additional default entry may map a name prefix "/abc" to a MAC address 12:34:56:78:9A:9B, meaning that all Interests in the "/abc" namespace should be forwarded to a face with MAC address 12:34:56:78:9A:9B.

Namespace configuration module 216 is responsible for configuring the namespaces on CCN-DNCP client 200 based on the DNCP response. Once the namespaces are configured correctly, Interest-generation module 208 is then able to generate various service requests (which are in forms of Interests) accordingly, and forwarding module 210 is able to forward those service requests to appropriate destinations. For example, if the DNCP response specifies that the namespace for device-discovery services provided in room 2015 is "/devices/room2015," then Interest-generation module 208 can generate an Interest with a name prefix "/devices/room2015," and forwarding module 210 can forward such an Interest based on the name prefix. In addition, the system may use substructure schemes to refine the device-discovery space based on the device types. For example, the namespace "/devices/room2015/thermometers" may be used to discover all thermometers in room 2015. Other additional namespaces can also be included in the DNCP response, thus allowing namespace configuration module 216 to configure those namespaces accordingly. For example, a network may include a printer, and the DNCP response to a new client device may state that the namespace for the printer service is "/abc/printer." When the new device attempts to print out a document, it can send its printing request to namespace "/abc/printer." Note that the forwarding information associated with the namespaces is stored in FIB 214.

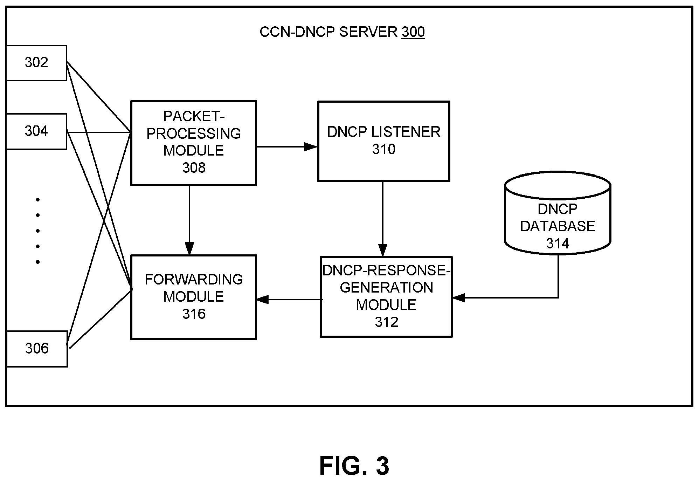

FIG. 3 presents a diagram presenting an exemplary architecture of a CCN-DNCP server, in accordance with an embodiment of the present invention. In FIG. 3, CCN-DNCP server 300 includes a number of faces, such as faces 302, 304, and 306; a packet-processing module 308; a DNCP listener 310; a DNCP-response-generation module 312; a DNCP database 314; and a forwarding module 316.

Faces 302-306 are similar to faces 202-206, and can include both physical interfaces and application processes. Packet-processing module 308 is responsible for processing packets received on the various faces. In some embodiments, packet-processing module 308 extracts name prefix of the received packets. In further embodiments, if the name prefix of a received Interest is in the predetermined DNCP namespace (for example, the "/hello" namespace), packet-processing module 308 forwards the Interest to DNCP listener 310, which listens for Interest in the predetermined namespace. In the aforementioned example, the predetermined DNCP namespace is "/hello." When DNCP listener 310 receives a "HELLO" Interest message in the predetermined DNCP namespace, CCN-DNCP server 300 can determine that the node that sends the "HELLO" Interest is requesting DNCP service. In response to the DNCP request, DNCP-response-generation module 312 generates the appropriate DNCP response, in the form of a Content Packet, based on information stored in DNCP database 314. DNCP database 314 stores default FIB entries and various namespace configuration information, such as the namespace for device registration and discovery, the namespace for network service discovery, the namespace of a resolution service, the namespace of key services, etc. The namespace for device registration and discovery allows a client device to send registration or device-discovery Interest messages to a server. The service discovery namespace allows a client device to send Interest message in order to discover available network services. The namespace of a resolution service allows a client device to send Interest to the namespace in order to obtain publisher keys or hashes of content names. The namespace of the key services allows a client device to send Interest in order to obtain certified signing keys if the client device is not pre-loaded with certified keys. Note that because the network environment may change with time, the DNCP response packet may optionally include a lease time for each namespace, stating how long the namespace will remain valid. In such scenarios, the client device may need to periodically send DNCP Interest to ensure that their namespace configurations are still valid, and to update their namespace configurations when needed. Note that, because the client device has received previous DNCP response, it does not need to broadcast the DNCP Interest again, and can directly send the DNCP Interest to the DNCP service.

The generated DNCP response packet (as a Content Object) is forwarded back to the incoming face of the "HELLO" Interest by forwarding module 316 to ensure that the response packet is reverse-forwarded back to the originating node of the "HELLO" Interest.

There exists a situation where configuration information stored in DNCP database is too much for a single Content Object, or the configuration information may include multiple sectors some of which are essential for device operation and some of which may be optional. For example, the default FIB entries are essential configuration information, whereas the printer service may be optional. In some embodiments, DNCP-response-generation module 312 may generate a DNCP Content Object that includes instructions for the client device to obtain additional configuration information. For example, when a client device sends a first "HELLO" Interest that is forwarded to CCN-DNCP server 300, DNCP-response-generation module 312 may generate a DNCP Content Object that includes the essential configuration information (such as default FIB entries and the namespace for device registration). The DNCP Content Object may also indicate more DNCP information available, and specify the namespace associated with the additional DNCP information. Hence, to obtain the additional information, the client device can send additional DNCP request to the specified namespace. For example, the initial DNCP response to a client device may indicate that printing service is available, and to obtain namespace for the printing service, the client device needs to send a new "HELLO" Interest to the "/hello-1" namespace. Similarly, if the available DNCP information occupies multiple Content Objects, the first Content Object sent to the client device may indicate that the client device needs to send a new "HELLO" Interest to the "/hello-1" namespace to retrieve a subsequent Content Object.

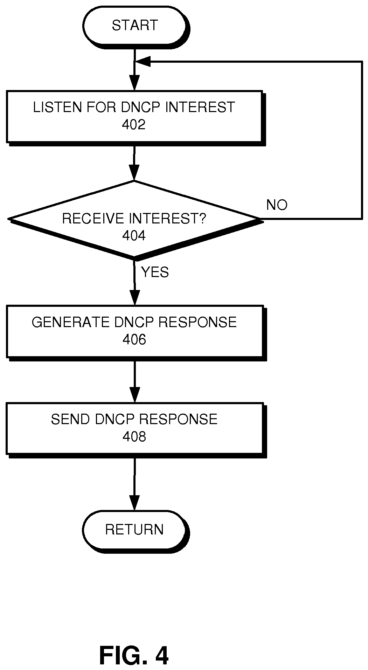

FIG. 4 presents a flowchart illustrating an exemplary server process for dynamic namespace configuration, in accordance with an embodiment of the present invention. During operation, the system listens for Interest in a predetermined namespace (operation 402), and determines whether a predetermined Interest with a name prefix in such a namespace is received from a client device (operation 404). For example, the predetermined namespace can be a DNCP namespace, such as "/hello," and the predetermined DNCP Interest can be a predefined "HELLO" packet. In some embodiments, the DNCP namespace and the format of the "HELLO" Interest are preconfigured by the CCN protocol running on the server and the client devices.

If the system receives a DNCP Interest, the system generates a DNCP response (operation 406), and sends the DNCP response back to the originating node of the DNCP Interest (operation 408). The DNCP response can include default FIB entries (such as a default face to which the client device can send its Interest) as well as namespaces for various services. In some embodiments, the DNCP Interest indicates the types of services requested by the client, and the DNCP response is generated based in the requested services. For example, the DNCP Interest may indicate that the originating node does not have a signing key. In response, the DNCP response includes the namespace of the key service, to which the client can send an Interest to obtain the signing key.

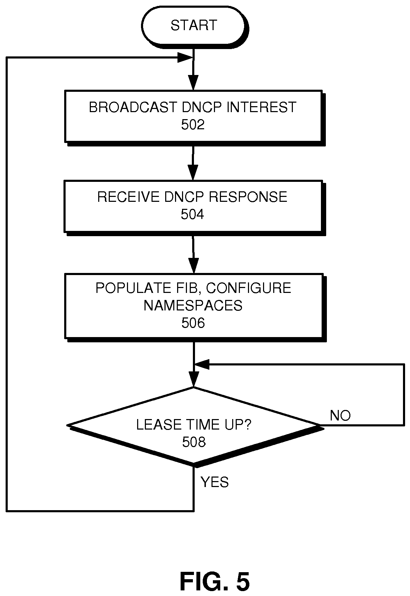

FIG. 5 presents a flowchart illustrating an exemplary client process for dynamic namespace configuration, in accordance with an embodiment of the present invention. During operation, a client device that joins a new environment or is brought-up online for the first time broadcast a DNCP request message on all of its faces (operation 502). In some embodiments, the DNCP request message is an Interest packet with a name prefix within a predefined namespace. The predefined namespace can be a namespace reserved specially for the DNCP service. For example, the system may reserve a namespace "/hello" for the DNCP service. The DNCP Interest or the "HELLO" Interest then has a name prefix "/hello." Note that because the DNCP Interest (or "HELLO" Interest) is broadcast on all faces of the client device, a DNCP service may either directly receives the "HELLO" Interest on one of its faces, or receives the "HELLO" Interest forwarded by other devices. In some embodiments, there exists other devices (such as other client devices) in the network environment that perform the task of a bridge or have the forwarding information set up in a way such that these devices can receive and forward the "HELLO" Interest to the DNCP service in a CCN network.

The client device then receives a DNCP response packet from the DNCP service (operation 504). The DNCP response packet is in the form of a Content Object. In some embodiments, the name of the DNCP Content Object matches the name of the Interest message, such as "/hello." The DNCP Content Object includes information that can be used to configure the client device, such as default FIB entries and various namespaces that can be used by the client device to obtain necessary services. Upon receiving the DNCP response, the client device populates its FIB with the default entries and configures its namespaces (operation 506). Note that once the FIB is populated with the default entries and the namespaces are configured, the client device would be able to generate Interest with the appropriate name prefix in order to obtain services.

In some embodiments, the namespace included in the DNCP response may have a lease time (such as a day or 10 days), meaning that they are valid only for a certain predetermined time period. In such scenarios, the client device may determine whether the lease time is up (operation 508), and resend the DCNP Interest to obtain up to date configuration setting (operation 502).

Note that in the examples shown in FIGs. 2-5, the DNCP request is answered by a DNCP server or a server process. In practice, it also possible to have the DNCP-response process running on a cluster of computers. Moreover, it is also possible to have other peer client computers in the CCN network to respond to the DNCP Interest. In some embodiments, a peer client machine can respond to a DNCP Interest with a Content Object that includes re-direction information. For example, the Content Object may provide an alternative DNCP namespace (which is different from the namespace of the DNCP Interest) to which the requesting client can send DNCP requests. This re-direction Content Object may also include configuration information of other client devices in the CCN network. For example, a client device joining a CCN network sends a DNCP Interest to the "/hello" namespace, and receives a Content Object from an existing peer client device in the CCN network. The Content Object indicates that the new client device needs to send a new DNCP Interest to a namespace "/name-abc" to obtain configuration information. In addition, the Content Object may also state that other peer devices on the network use the "/device-discovery" namespace for registration of new devices and for discovery of other new devices on the network.

### Device Registration and Discovery

Once the client device has received necessary namespace configuration information, it can send Interest packets to appropriate namespaces in order to obtain services, such as device registration and discovery. Registration of a device is essential for the device to publish its data under one or more authorized name prefixes, and/or to allow other devices on the network to reach this device. Moreover, registration allows one to validate that a device is permitted to be on the network and to subject the device to other authentication/security processes. In some embodiments, in order for the network to register and discover new devices, all device registration and setup services are configured to listen for Interest messages in a specific namespace. This specific namespace can be pre-defined and agreed-upon. During the registration process, a new device can send Interest messages to this specific namespace, with device ID and other information associated with the device included in the Interest messages. A service (such as a device-registration service or a device-discovery service) that is authorized to respond to these Interest messages can reply with a Content Object. The Content Object confirms the device ID and provides additional information that can be used by the device to publish its data.

In some embodiments, a device-discovery broker assigns names to devices in the network and provides namespaces where the devices can publish their data. To do so, the device-discovery broker needs to manage a device- discovery namespace schema, which includes an organized namespace structure capable of representing various types of devices. In addition, the device-discovery broker assists devices to discover other devices in the same CCN network.

The device-discovery namespace schema organizes namespace associated with the various types of devices in a meaningful way to facilitate device discoveries in the network. There are several techniques to handle the device-discovery namespace schema. One option is to choose a name prefix as the root prefix of the device-discovery namespace. For example, the namespace "/devices" can be used as a root prefix for all device-discovery services. In addition, a substructure scheme can also be used to further refine the area of device discovery. For example, a namespace "/devices/abc/room2105" can serve as the namespace prefix for all device-discovery services within Room 2105 in the "/abc" namespace.

Furthermore, one can use substructure schemes to refine the device-discovery namespace based on the device type. For example, the namespace "/devices/abc/printers" can be used to discover new printers in the "/device/abc" namespace, while "/devices/abc/thermometers/room2105 can be used for all device-discovery services related to thermometers in Room 2105 in the "/abc" namespace. Decisions on how to create and manage the various substructures within a namespace can be handled by the device-discovery service.

A second option is for devices to come equipped with their own manufacturer-supplied namespace schema for device discovery. For example, all devices manufactured by a "def' company can use "/devices/def' as their root prefix and send Interest messages to that particular namespace prefix. The device-discovery service that is "listening" on this root name prefix processes the Interest message.

One can see both the first and second options rely on a predetermined namespace schema for device discovery. In other words, the devices have been pre-configured (by the device manufacturer or by the CCN protocol running on the device) with the device-discovery namespace, and automatically send Interest to the pre-configured device-discovery namespace.

A third option is to rely on the aforementioned DNCP service that automatically configures the device-discovery namespace when a device is freshly taken out of a box or has been introduced into an environment for the first time. More specifically, the device broadcasts a "HELLO" Interest on all of its faces in the DNCP namespace. The DNCP service responds to that "HELLO" Interest with a Content Object that specifies the root name prefix of the device-discovery service (such as "/abc/devices"). Once the device receives such a Content Object, it sends an Interest message to the specified root name prefix for the device-discovery service.

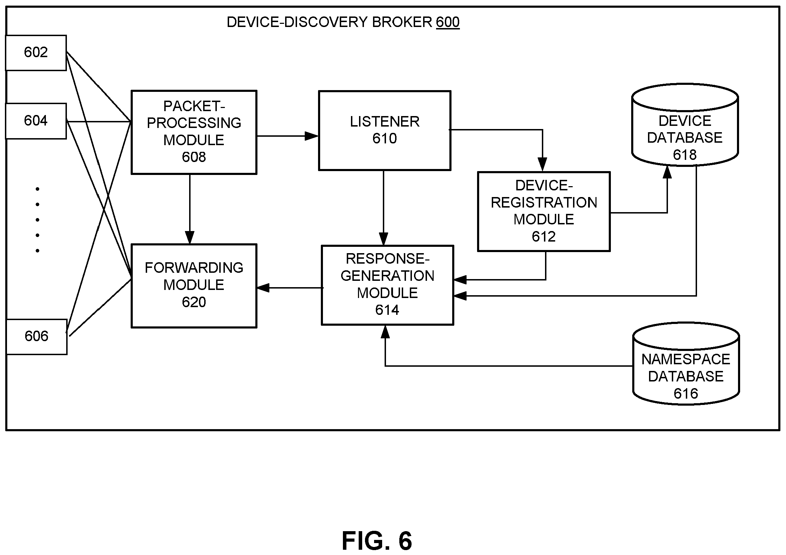

FIG. 6 presents a diagram illustrating an exemplary architecture of a device-discovery broker, in accordance with an embodiment of the present invention. In FIG. 6, device-discovery broker 600 includes a number of faces, such as faces 602, 604, and 606; a packet-processing module 608; a listener 610; a device-registration module 612; a response-generation module 614; a namespace database 616; a device database 618, and a forwarding module 620.

Faces 602-606 are similar to faces 202-206, and can include both physical interfaces and application processes. Packet-processing module 608 is responsible for processing packets received on the various faces. In some embodiments, packet-processing module 608 checks the name prefix of the received Interests, and sends an Interest to listener 610 if the name prefix of the Interest is within the device-discovery namespace. Listener 610 listens for Interest messages on the root prefix of the device-discovery namespace, such as "/abc/devices." Note that the device-discovery namespace may provide a registration service (with the name prefix "/abc/devices/registration") for the device to register with device-discovery broker 600, and a discovery service (with the name prefix "/abc/devices/list") for the device to discover other devices on the network. Note that a new device needs to register first before it can be discovered by other devices.

When listener 610 receives an Interest message in the registration namespace, device-registration module 612 registers the device sending the Interest by extracting information included in the Interest message. In some embodiments, the Interest message for device registration can include various information associated with the device, including but not limited to the device ID (which can be a unique ID issued by the manufacturer), a public key used by the device (or a reference to the public key) for signing content, and a description of the device. The description of the device can include the device type (such as light bulb or thermometer), the model number, etc. Based on the received registration Interest, device-registration module 612 determines whether the Interest includes all required information for registration. If so, response-generation module 614 generates a "registration confirmed" Content Object. The "registration-confirmed" Content Object can include an assigned name of the device, and optionally a routable name prefix for the device. For example, a registered thermometer may be given a name "/thermometer-id-123," and optionally a routable name prefix "/abc/Room2105/thermometer-id-123." Other device-registration information can also be included in the "registration confirmed" Content Object, including but not limited to: a subdirectory namespace, a namespace for the device to publish data to (or a namespace under which the device is authorized to publish), and a namespace for the certificate authority where the device can obtain certified keys (if it does not have them already). Note that, in further embodiments, based on a security policy, once the device obtains the keys (such as a public-private key pair) from the key service, the device may be required to send the device name along with its public key to device-discovery broker 600. These namespaces are obtained from namespace database 616. Note that the subdirectory namespace allows for further device-discovery services. For example, a subdirectory namespace "/devices/abc/room2105" allows for device discovery in Room 2105 within the namespace "/abc." An exemplary namespace for the thermometer to publish data to may be "/abc/Room2105/thermometer-id-123/data." Note that it is possible for response-generation module 614 to generate multiple Content Objects, each containing a portion of the device registration information and a namespace that can be used by the client device to obtain the next portion. In other words, a chain of Content Objects can be formed, with each item including a pointer to the next item.

If device-registration module 612 determines that not all required information is provided, response-generation module 614 generates an "information needed" Content Object which specifies what information is needed for the device to correctly register itself. The information that may be needed can include authentication information, key information, etc., depending on the particular security policy currently implemented by device-discovery broker 600. The Content Object (either the "registration confirmed" or the "information needed") is returned to the device by forwarding module 620.

Once a device is registered, device database 618 is updated to include the new device name and registration information associated with the new device. Device database 618 facilitates the process of discovering other devices on the network. During operation, when listener 610 receives an Interest message in the discovery service namespace (such as "/abc/devices/list"), response-generation module 614 generates a Content Object based on information stored in device database 618. In some embodiments, this Content Object may include a list of all currently registered devices in the network. In further embodiments, appropriate authentication and encryption is part of the device-discovery process. For example, only certain devices are authorized to obtain a list of all registered devices. In addition, a registered client device may optionally hide itself from being discovered by other client devices in the network.

In addition to the initial registration and discovery, client devices can also send periodic heartbeat messages to device-discovery broker 600 such that device-discovery broker 600 can maintain an updated and current list of all active devices in the network. In some embodiments, listener 610 may listen for Interest messages in this predetermined heartbeat namespace (which can be distributed to the device during the initial device configuration). A heartbeat Interest sent by a device should include the assigned name of the device and is signed with the device's key. Once listener 610 receives such a periodic heartbeat message, response-generation module 614 generates a confirmation Content Object, and forwarding module 620 sends the confirmation Content Object back to the device.

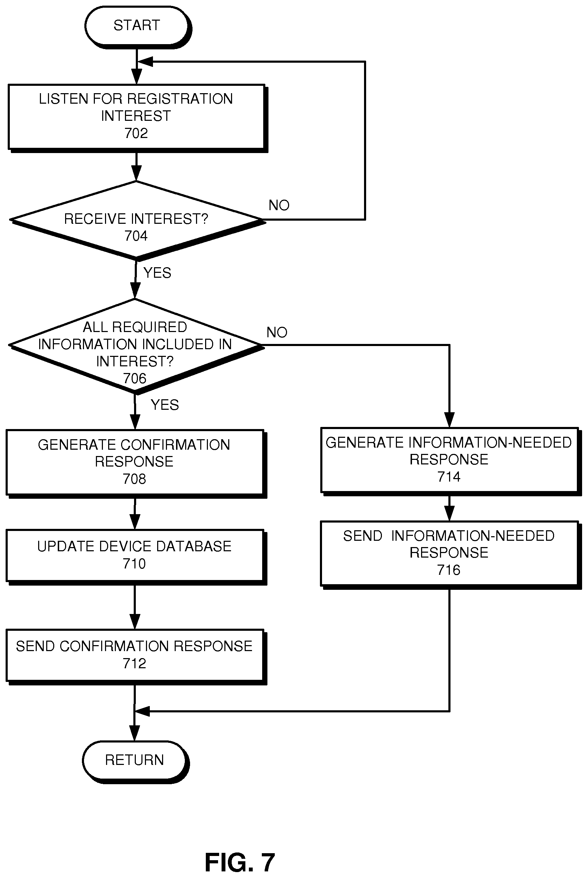

FIG. 7 presents a flowchart illustrating an exemplary device-registration process performed by the device-discovery broker, in accordance with an embodiment of the present invention. During operation, the device-discovery broker listens for registration Interest on the namespace of the registration service (operation 702), and determines whether a registration Interest is received (operation 704). If so, the device-discovery broker determines whether all information required for correctly registering the device is included in the registration Interest (operation 706). This information-checking operation can include the additional step of determining whether the device has been previously registered, and if so, whether registration update is required. Moreover, the device-discovery broker may also perform security checks to ensure that the device is authorized to register itself to prevent malicious nodes from registering themselves to the network. If all required information is included and the device passes the security check, the device-discovery broker generates a registration confirmation Content Object, which includes the name assigned to the device and optionally a routable name prefix (operation 708). Note that the routable name prefix allows the device to be reached by other devices. For example, a laptop computer may receive, from the device-discovery broker, a name "/laptop," and optionally a routable name prefix "/abc/laptop." Hence, other devices can reach the laptop by sending Interest messages to "/abc/laptop." Additional information that can be used by the device to discover other devices, to publish data, and to obtain signing keys can also be included in the registration confirmation Content Object. For example, the aforementioned laptop computer ("/abc/laptop") may be authorized to publish data under one or more name prefixes that may be different from the routable name prefix assigned to the laptop, such as "/abc/research/papers." This additional name prefix for publishing data can also be included in the registration confirmation Content Object. The device-discovery broker then updates its device database (operation 710), and sends back the registration confirmation Content Object to the device (operation 712). If not all required information is provided by the registration Interest, the device-discovery broker generates an information-needed Content Object (operation 714), and sends that Content Object back to the device to request the additional information (operation 716).

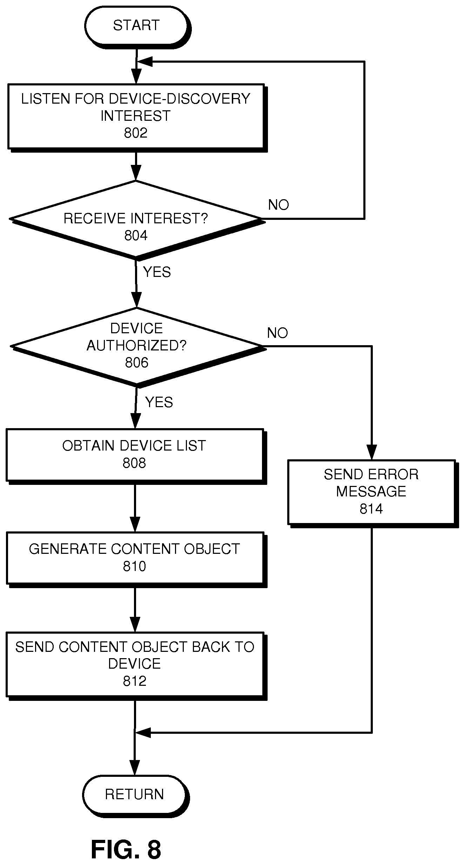

FIG. 8 presents a flowchart illustrating an exemplary device-discovery process performed by the device-discovery broker, in accordance with an embodiment of the present invention. During operation, the device-discovery broker listens for Interest on the namespace of the discovery service (operation 802), and determines whether an Interest is received (operation 804). If so, the device-discovery broker determines whether the Interest is sent by a device authorized to receive the list of registered devices (operation 806). To do so, the device-discovery broker can perform a security check based on access information (such as keys, user ID, password, etc.) included in the Interest message. If the device passes the security check and is authorized to receive the device list, the device-discovery broker obtains a list of registered devices from the device database (operation 808), generates a Content Object that includes the device list (operation 810), and sends back the Content Object to the requesting device (operation 812). If the device-discovery broker determines that the device is not authorized to receive the list of devices, it sends back an error message (operation 814).

Note that the device-discovery broker can be a process running on a stand-alone, centralized server that handles the device configuration and registration, or can be a distributed process running on a cluster of machines. Alternatively, it can be a process running on any machine, which may be part of a client device. For example, in a CCN network, a client device may be capable of providing the necessary device registration and discovery services to other client devices.

### Computer and Communication System

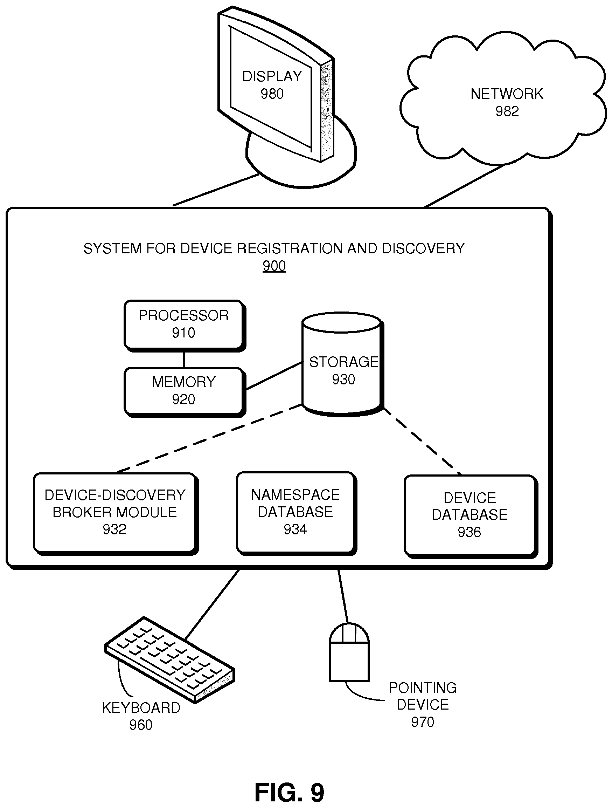

FIG. 9 illustrates an exemplary system for device registration and discovery, in accordance with an embodiment of the present invention. A system 900 for device registration and discovery comprises a processor 910, a memory 920, and a storage 930. Storage 930 typically stores instructions that can be loaded into memory 920 and executed by processor 910 to perform the methods mentioned above. In one embodiment, the instructions in storage 930 can implement a device-discovery broker module 932, a namespace database 934, and a device database 936, all of which can be in communication with each other through various means.

In some embodiments, modules 932, 934, and 936, can be partially or entirely implemented in hardware and can be part of processor 910. Further, in some embodiments, the system may not include a separate processor and memory. Instead, in addition to performing their specific tasks, modules 932, 934, and 936, either separately or in concert, may be part of general- or special-purpose computation engines.

Storage 930 stores programs to be executed by processor 910. Specifically, storage 930 stores a program that implements a system (application) for facilitating device registration and discovery. During operation, the application program can be loaded from storage 930 into memory 920 and executed by processor 910. As a result, system 900 can perform the functions described above. System 900 can be coupled to an optional display 980 (which may be a touch screen display), keyboard 960, and pointing device 970, and can also be coupled via one or more network interfaces to network 982.

The data structures and code described in this detailed description are typically stored on a computer-readable storage medium, which may be any device or medium that can store code and/or data for use by a computer system. The computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing computer-readable media now known or later developed.

The methods and processes described in the detailed description section can be embodied as code and/or data, which can be stored in a computer-readable storage medium as described above. When a computer system reads and executes the code and/or data stored on the computer-readable storage medium, the computer system performs the methods and processes embodied as data structures and code and stored within the computer-readable storage medium.

Furthermore, methods and processes described herein can be included in hardware modules or apparatus. These modules or apparatus may include, but are not limited to, an application-specific integrated circuit (ASIC) chip, a field-programmable gate array (FPGA), a dedicated or shared processor that executes a particular software module or a piece of code at a particular time, and/or other programmable-logic devices now known or later developed. When the hardware modules or apparatus are activated, they perform the methods and processes included within them.

The above description is presented to enable any person skilled in the art to make and use the embodiments, and is provided in the context of a particular application and its requirements. Various modifications to the disclosed embodiments will be readily apparent to those skilled in the art. Thus, the present invention is not limited to the embodiments shown. The present invention is defined by the claims.

## Claims

1. A computer system (900) for device registration and discovery of a content-centric network, CCN, the system comprising:
a processor (910); and
a storage device (930) coupled to the processor and storing instructions which when executed by the processor cause the processor to perform a method, the method comprising:
receiving (404), by the computer system, an interest for registration of a client device, wherein the interest includes at least a unique identifier associated with the client device;
generating (406) a content object in response to the interest, wherein the content object includes at least a name assigned to the client device, a routable name prefix allowing the device to be reached by other devices, and one or more name prefixes for the client device to publish data under, wherein the one or more name prefixes are different from the routable name prefix; and
sending (408) the content object to the client device, thereby enabling the client device to publish data and to be discovered by other client devices in the CCN.

2. The system (900) of claim 1, wherein the interest further includes one or more of:
a public key associated with the client
device; a device type;
a device model number; and
a device identifier in an arbitrary format.

3. The system (900) of claim 1, wherein the content object further includes one or more of:
a routable name prefix assigned to the client device; a subdirectory device-discovery namespace; and a namespace for the client device to obtain a signing key.

4. The system (900) of claim 1, wherein the interest has a pre- determined name prefix.

5. The system (900) of claim 4, wherein the method further comprises notifying the client device of the pre-determined name prefix during an initial configuration of the client device.

6. The system (900) of claim 4, wherein the pre-determined name prefix is provided by a manufacturer of the client device.

7. The system (900) of claim 1, wherein the method further comprises updating a device database (710) by adding the client device using the
assigned name.

8. The system (900) of claim 7, wherein the method further comprises:
receiving an additional interest for discovery of other devices in the CCN; in response to the additional interest, generating a device-list content
object based on information stored in the device database;
and returning the device-list content object.

9. The system (900) of claim 8, wherein the method further comprises:
performing a security check to determine whether a device sending the additional interest is authorized to obtain the device-list content object; and
in response to determining that the device sending the additional interest is authorized to obtain the device-list content object, sending the device-list content object to the authorized device.

10. A method for device registration and discovery in a content-centric network, CCN, the method comprising the following steps performed by a computer system:
receiving (404) an interest for registration of a client device, wherein the interest includes at least a unique identifier associated with the client device;
generating (406) a content object in response to the interest, wherein the content object includes at least a name assigned to the client device, a routable name prefix allowing the device to be reached by other devices, and one or more name prefixes for the client device to publish data under, wherein the one or more name prefixes are different from the routable name prefix; and
sending (408) the content object to the client device, thereby enabling the client device to publish data and to be discovered by other client devices in the CCN.

## Patentansprüche

1. Computersystem (900) zur Geräteregistrierung und Entdeckung eines inhaltszentrischen Netzwerks, CCN, wobei das System Folgendes umfasst:
einen Prozessor (910); und
ein Speichergerät (930), das mit dem Prozessor gekoppelt ist und Befehle speichert, die bei Ausführung durch den Prozessor bewirken, dass der Prozessor ein Verfahren ausführt, wobei das Verfahren Folgendes beinhaltet:
Empfangen (404), durch das Computersystem, eines Interesses für die Registrierung eines Client-Geräts, wobei das Interesse mindestens eine mit dem Client-Gerät assoziierte eindeutige Kennung umfasst;
Erzeugen (406) eines Inhaltsobjekts als Reaktion auf das Interesse, wobei das Inhaltsobjekt mindestens einen dem Client-Gerät zugewiesenen Namen, ein routingfähiges Namenspräfix, das es ermöglicht, dass das Gerät von anderen Geräten erreicht wird, und ein oder mehrere Namenspräfixe für das Client-Gerät enthält, unter denen Daten veröffentlicht werden können, wobei sich die ein oder mehreren Namenspräfixe von dem routingfähigen Namenspräfix unterscheiden; und
Senden (408) des Inhaltsobjekts an das Client-Gerät, um es dadurch zu ermöglichen, dass das Client-Gerät Daten veröffentlicht und von anderen Client-Geräten im CCN entdeckt wird.

2. System (900) nach Anspruch 1, wobei das Interesse ferner eines oder mehrere der Folgenden umfasst:
einen öffentlichen Schlüssel, der mit dem Client-Gerät assoziiert ist;
einen Gerätetyp;
eine Gerätemodellnummer; und
eine Gerätekennung in einem beliebigen Format.

3. System (900) von Anspruch 1, wobei das Inhaltsobjekt ferner eines oder mehrere der Folgenden enthält:
ein routingfähiges Namenspräfix, das dem Client-Gerät zugewiesen ist;
einen Unterverzeichnis-Geräteentdeckungsnamensraum; und einen Namensraum für das Client-Gerät, um einen Signierschlüssel zu erhalten.

4. System (900) von Anspruch 1, wobei das Interesse ein vorbestimmtes Namenspräfix hat.

5. System (900) nach Anspruch 4, wobei das Verfahren ferner das Benachrichtigen des Client-Geräts über das vorbestimmte Namenspräfix während einer anfänglichen Konfiguration des Client-Geräts umfasst.

6. System (900) nach Anspruch 4, wobei das vorbestimmte Namenspräfix von einem Hersteller des Client-Geräts bereitgestellt wird.

7. System (900) von Anspruch 1, wobei das Verfahren ferner das Aktualisieren einer Gerätedatenbank (710) durch Hinzufügen des Client-Geräts unter Verwendung des zugewiesenen Namens beinhaltet.

8. System (900) von Anspruch 7, wobei das Verfahren ferner Folgendes beinhaltet:
Empfangen eines zusätzlichen Interesses für die Entdeckung anderer Geräte im CCN; Erzeugen, als Reaktion auf das zusätzliche Interesse, eines Inhaltsobjekts der Geräteliste auf der Basis von in der Gerätedatenbank gespeicherten Informationen;
und Zurückgeben des Gerätelisteninhaltsobjekts.

9. System (900) nach Anspruch 8, wobei das Verfahren ferner Folgendes beinhaltet:
Durchführen einer Sicherheitsüberprüfung, um festzustellen, ob ein Gerät, das das zusätzliche Interesse sendet, berechtigt ist, das Gerätelisteninhaltsobjekt zu erhalten; und
Senden, als Reaktion auf die Feststellung, dass das Gerät, das das zusätzliche Interesse sendet, berechtigt ist, das Gerätelisteninhaltsobjekt zu erhalten, des Gerätelisteninhaltsobjekts an das berechtigte Gerät.

10. Verfahren zur Geräteregistrierung und -entdeckung in einem inhaltszentrischen Netzwerk, CCN, wobei das Verfahren die folgenden, von einem Computersystem durchgeführten Schritte beinhaltet:
Empfangen (404) eines Interesses für die Registrierung eines Client-Geräts, wobei das Interesse mindestens eine mit dem Client-Gerät assoziierte eindeutige Kennung umfasst;
Erzeugen (406) eines Inhaltsobjekts als Reaktion auf das Interesse, wobei das Inhaltsobjekt mindestens einen dem Client-Gerät zugeweisenen Namen, ein routingfähiges Namenspräfix, das es ermöglicht, dass das Gerät von anderen Geräten erreicht wird, und ein oder mehrere Namenspräfixe für das Client-Gerät enthält, unter denen Daten veröffentlicht werden können, wobei sich die ein oder mehreren Namenspräfixe von dem routingfähigen Namenspräfix unterscheiden; und
Senden (408) des Inhaltsobjekts an das Client-Gerät, um es dadurch zu ermöglichen, dass das Client-Gerät Daten veröffentlicht und von anderen Client-Geräten im CCN entdeckt wird.

## Revendications

1. Système informatique (900) d'enregistrement et de découverte de dispositifs d'un réseau axé sur le contenu, CCN, le système comprenant :
un processeur (910) ; et
un dispositif de mémorisation (930) couplé au processeur et mémorisant des instructions qui, à leur exécution par le processeur, amènent le processeur à réaliser un procédé, le procédé comprenant :
la réception (404), par le système informatique, d'un intérêt d'enregistrement d'un dispositif client, l'intérêt comportant au moins un identifiant unique associé au dispositif client ;
la génération (406) d'un objet de contenu en réponse à l'intérêt, l'objet de contenu comportant au moins un nom assigné au dispositif client, un préfixe de nom routable permettant au dispositif d'être joint par d'autres dispositifs, et un ou plusieurs préfixes de nom sous lesquels le dispositif client peut publier des données, les un ou plusieurs préfixes de nom étant différents du préfixe de nom routable ; et
l'envoi (408) de l'objet de contenu au dispositif client, permettant ainsi au dispositif client de publier des données et d'être découvert par d'autres dispositifs clients dans le CCN.

2. Système (900) selon la revendication 1, dans lequel l'intérêt comporte en outre un ou plusieurs :
d'une clé publique associée au dispositif client ;
d'un type de dispositif ;
d'un numéro de modèle de dispositif ; et
d'un identifiant de dispositif dans un format arbitraire.

3. Système (900) selon la revendication 1, dans lequel l'objet de contenu comporte en outre un ou plusieurs :
d'un préfixe de nom routable assigné au dispositif client ; d'un espace de noms de découverte de dispositifs de sous-répertoire ; et d'un espace de noms du dispositif client pour obtenir une clé de signature.

4. Système (900) selon la revendication 1, dans lequel l'intérêt a un préfixe de nom prédéterminé.

5. Système (900) selon la revendication 4, dans lequel le procédé comprend en outre la notification au dispositif client du préfixe de nom prédéterminé durant une configuration initiale du dispositif client.

6. Système (900) selon la revendication 4, dans lequel le préfixe de nom prédéterminé est fourni par un fabricant du dispositif client.

7. Système (900) selon la revendication 1, dans lequel le procédé comprend en outre l'actualisation d'une base de données de dispositifs (710) en ajoutant le dispositif client à l'aide du nom assigné.

8. Système (900) selon la revendication 7, dans lequel le procédé comprend en outre :
la réception d'un intérêt supplémentaire de découverte d'autres dispositifs dans le CCN ; en réponse à l'intérêt supplémentaire, la génération d'un objet de contenu de liste de dispositifs sur la base d'informations mémorisées dans la base de données de dispositifs ;
et le renvoi de l'objet de contenu de liste de dispositifs.

9. Système (900) selon la revendication 8, dans lequel le procédé comprend en outre :
la réalisation d'une vérification de sécurité pour déterminer qu'un dispositif envoyant l'intérêt supplémentaire est autorisé ou non à obtenir l'objet de contenu de liste de dispositifs ; et
en réponse à la détermination que le dispositif qui envoie l'intérêt supplémentaire est autorisé à obtenir l'objet de contenu de liste de dispositifs, l'envoi de l'objet de contenu de liste de dispositifs au dispositif autorisé.

10. Procédé d'enregistrement et de découverte de dispositifs dans un réseau axé sur le contenu, CCN, le procédé comprenant les étapes suivantes réalisées par un système informatique :
la réception (404) d'un intérêt d'enregistrement d'un dispositif client, l'intérêt comportant au moins un identifiant unique associé au dispositif client ;
la génération (406) d'un objet de contenu en réponse à l'intérêt, l'objet de contenu comportant au moins un nom assigné au dispositif client, un préfixe de nom routable permettant au dispositif d'être joint par d'autres dispositifs, et un ou plusieurs préfixes de nom sous lesquels le dispositif client peut publier des données, les un ou plusieurs préfixes de nom étant différents du préfixe de nom routable ; et
l'envoi (408) de l'objet de contenu au dispositif client, permettant ainsi au dispositif client de publier des données et d'être découvert par d'autres dispositifs clients dans le CCN.
